# EUROPEAN PATENT APPLICATION

(11) **EP 1 424 664 A2**
(43) Date of publication of application: **02.06.2004**
(21) Application number: 03026848.6
(22) Date of filing: 21.11.2003
(51) Int. Cl.: G07F 19/00

(54) **Secure payment system and method having one-time use authorization**

(30) Priority: 22.11.2002 US 302016
(71) Applicant: PITNEY BOWES INC., Stamford, Connecticut 06926-0700 (US)
(72) Inventor: Foth, Thomas, J., Trumbull, CT 06611 (US); Desmond, John, G., Fairfield, CT 06430 (US); Mangiamelli, Cindy, Southbury, CT 06488 (US)
(74) Representative: HOFFMANN - EITLE

(57) **Abstract**

A payment system and method is provided. A buyer establishes an account with the payment system. The buyer makes a request for payment for a transaction to the payment service. The request includes information related to the transaction. The payment system processes the information related to the transaction and issues a payment approval identification number. At the point of sale, access to the payment system is gained utilizing an access device not associated with the buyer, and information related to transaction and the identification number are provided to the payment system. The payment system will verify the information provided at the point of sale related to the transaction with the information provided by the buyer when payment was authorized. If the identification number is verified by the payment system, funds for the transaction will be passed from the buyer's account directly to the merchant's account.

## Description

The invention disclosed herein relates generally to the field of payment systems, and more particularly to a system and method for securely transferring funds between two parties utilizing a third party intermediary.

A buyer of purchased goods or services currently has several options to pay for the goods, including, for example, payment instruments such as cash, check, transaction cards (debit or credit), etc. In many situations, the buyer will personally present the payment instrument to the merchant. This provides the buyer with secure control of the payment instrument, and ensures the buyer of an accurate accounting of the payment instrument and the knowledge that it was used as intended. In many situations, however, a third party intermediary, e.g., an agent, will process the transaction with the merchant on behalf of the buyer. In this situation, the buyer must provide the payment instrument to the agent, along with any associated security codes, if necessary, with the expectation that the agent will use the payment instrument only as directed by the buyer. This puts the buyer at risk of losing any funds associated with the payment instrument should an unscrupulous agent fail to follow the buyer's directions. If the payment instrument is a check or cash, the risk to the buyer is the amount of cash or the amount specified on the check. If the payment instrument is a blank check, or a transaction card issued to the buyer, the risk to the buyer significantly increases, as the buyer will have no way to limit the amount of funds the agent now has access to in case of fraudulent use of the blank check or transaction card.

One attempt at a security measure to address this issue is described in U.S. Patent No. 6,052,675, which is directed to preauthorizing a credit card for a particular transaction that is contemplated to occur in the future. In anticipation of a transaction, the credit card owner provides the bank with the owner's account number and requested network data or vendor information. Then, during the transaction approval process, the vendor transmits the account number and requested network data to the bank for verification. If the requested network data of the user and the network data received from the vendor match, then the transaction is approved. Otherwise, the transaction is not approved.

Although this security measure adds a degree of increased security, it suffers from disadvantages and drawbacks. Specifically, the credit card owner must still provide either the buyer's actual credit card or the buyer's credit card number to an agent that will be processing the transaction on behalf of the owner. Accordingly, this will not reduce all aspects of fraud. For example, if the bank requests that the owner input the location (city/town, state) of the vendor, then a lost or stolen credit card may still be successfully used by an unscrupulous person in that location. In addition, unscrupulous people may get access to the owner's credit card data (name, bank, account number, etc.) even if the agent carefully protects the card. This occurs because the credit card data is often openly available, e.g., printed on receipts and bank statements that may be viewed by unintended people.

One example in which agents may be used to transact business on behalf of a buyer is with permit mail. Permit mail is especially suited for mailers that have large volumes of mail, since permit mail does not require the mailer to place one or more stamps on a mail piece, which can be labor intensive. With permit mail, instead of using stamps, the mailer prints a permit imprint, also referred to as an indicia, on each mail piece. The permit mail is brought to a postal induction site, referred to by the United States Postal Service (USPS) as a Bulk Mail Entry Unit (BMEU), by the mailer, or an agent of the mailer. The mailer also prepares forms indicating the number of mail pieces in the mailing and the amount of postage estimated to be due. For manifest mail, a sampling of the mailing is performed at the induction site for comparison with the manifest provided by the mailer to determine the accuracy of the estimates made by the mailer. For uniform mail (mail of uniform size and weight), the number of mail pieces in the mailing is verified by the postal authority. For example, verification can be performed by weighing ten mail pieces and, based on the ten mail pieces actually weighed, determining the average single piece weight. The entire mailing is then weighed, and the total weight is divided by the average single piece weight to determine the total number of mail pieces in the mailing. The postage due is then calculated based on the average single piece weight and the total number of mail pieces as determined by the postal authority. The mailer, or his agent, must provide payment for the total amount of postage due as determined by the postal authority. Such payment can be, for example, in the form of a check, cash, uncancelled stamps, or debit from a trust account into which money must be wired. The USPS also provides certain mailers with a postage payment system referred to as the Centralized Account Processing System (CAPS), which provides electronic options to presenting checks or cash in person. CAPS utilizes either a centralized trust account, in which funds are deposited electronically, via standard Automated Clearing House (ACH) banking mechanisms, to the CAPS bank prior to inducting the mailing, or a centralized debit account, in which the mailer's designated bank account will be debited, via standard ACH banking mechanisms, for the total of the day's mailings on the next business day. CAPS, however, is only available to mailers that meet specified minimum criteria and thus cannot be utilized by small or mid-sized mailers.

There are problems, however, with the conventional systems for paying for permit mail. For example, if the mailer is paying by cash, check, or uncancelled stamps, payment must be presented at the time the mailing is inducted by the postal authority. Accordingly, the mailer or agent presenting the mailing for induction must have either the correct amount of cash or uncancelled stamps, or a check for the correct amount, as determined by the verification or comparison performed by the postal authority. Typically, if there is a discrepancy less than some predetermined threshold, such as, for example, 1.5%, the postal authority will accept the amount of the payment as estimated by the mailer. However, if the discrepancy between what the mailer estimated as the amount of postage believed to be due and the amount due as calculated by the postal authority is greater than the threshold limit defined by the postal authority, the party presenting the mailing may either have insufficient cash or uncancelled stamps to pay for the mailing, or a check for the incorrect amount, i.e., either more or less than required. Discrepancies are fairly common, especially for uniform mailings having thousands, or tens of thousands, of mail pieces. With such large mailings, the entire mailing is weighed by rolling carts, including the trays containing the mail pieces, onto a large scale, and then subtracting a standardized weight for the carts and trays, to determine the total weight of the mailing. The weight of the carts and trays typically changes over time, as labels may be added, pieces may be missing, etc. Thus, it is quite possible that a discrepancy will occur due to the inherent inaccuracy of such a system. In addition, if the mailer failed to prepare the mail appropriately for claimed discounts, such as, for example, improperly sorting the mail or not providing readable barcodes on each piece, the postage amount for the mailing will be upgraded to reflect the true nature of the mailing and any discounts. If the delivery person for the mailer does not have the authority to draft a new check for the correct amount, either higher or lower, or immediate access to additional cash or uncancelled stamps to pay the postage due if higher than estimated by the mailer, the mailing will be rejected.

In addition to the above problems, payment in the form of cash or a check adds processing costs for the postal authority. For example, it takes additional time and expenses to record and account for payments made in this manner. Since funds are collected in a distributed fashion, it is possible for funds to get misplaced and/or checks to get lost.

As noted above, there is also an issue with the security of the payment instrument, i.e., cash, uncancelled stamps, or check, if the party presenting the mailing to the USPS for induction cannot be completely trusted (perhaps because the party presenting the mailing is simply a third party courier).

Thus, there exists a need for a payment system and method that reduces the risk of loss for a buyer when the buyer utilizes an agent to process the transaction, reduces transaction processing for the merchant, and provides a buyer with secure control over the use of funds for a specific transaction.

According to an aspect of the invention, a method for authorizing funds transfer from a buyer's account to a merchant's account is provided, the method comprising storing at a payment service server a data set including information identifying a transaction for which funds transfer is required, upon processing of the transaction, granting access to the payment service server via a merchant terminal and an access device associated with an account other than the buyer's account, receiving, at the payment service server, a data signal containing information specific to the transaction from the merchant terminal, comparing, at the payment service server, the information specific to the transaction with the information identifying the transaction, if the information specific to the transaction favorably compares with the information identifying to the transaction, providing an authorization signal from the payment service server to the merchant terminal to complete the transaction, and providing funds from the payment service server to pay for the transaction.

A system to provide funds to pay for a transaction between a buyer and a merchant is also provided, the system comprising a buyer terminal associated with the buyer; a merchant terminal associated with the merchant; and a payment service server including a memory, a comparator and at least one payment account for the buyer, the payment service server arranged to store a data set including information identifying a transaction for which funds transfer is required and receive information specific to the transaction from the merchant terminal upon processing of the transaction, the payment service server being further arranged to grant access by the merchant terminal utilizing an access device associated with an account other than the buyer's account, the comparator arranged to compare the information specific to the transaction received from the merchant terminal with the information identifying the transaction stored in the memory, and if the information specific to the transaction compares favorably with the information related to the transaction, the payment service server is arranged to provide funds from the at least one payment account for the buyer to the merchant to pay for the transaction.

As will be further described, therefore, the present invention alleviates the problems associated with the prior art and provides a payment system and method that reduces the risk of loss for a buyer when the buyer utilizes a third party intermediary to process the transaction, reduces transaction processing for the merchant, and provides the buyer with secure control over the use of funds for a specific transaction.

In accordance with an embodiment of the present invention, a payment system is provided to securely transfer funds. A buyer establishes an account with the payment system. The account could be set up, for example, as an interest bearing or non-interest bearing deposit account from which funds may be used to pay for authorized transactions. Additionally, the payment system could establish a credit line for the buyer. The payment system can issue transaction cards, similar to a debit card, to the buyer and one or more agents. Alternatively, the present invention could utilize existing transaction cards (debit cards or credit cards) issued by financial institutions.

When the buyer decides to make a purchase, a request for payment on behalf of the buyer is made to the payment service. The request includes information related to the purchase transaction, such as, for example, the specific items or category of items included in the transaction, the estimated cost of the transaction, a range of dates during which the transaction will occur, an identification of the merchant where the transaction will occur or a specific category of merchants where the transaction will occur, and, if an agent will be used to perform the transaction on behalf of the buyer, an identification of the agent. The buyer authorizes the payment system to provide the specified merchant (or any merchant within the specified category) with payment for the transaction, upon completion of the transaction, on the buyer's behalf based on this information. The payment system processes the information related to the transaction and issues a payment approval identification number (PAIN) for the transaction. The PAIN is a one-time use authorization number specific to the transaction. The PAIN may be cryptographically generated over a sufficiently wide range of integer values such that it would be difficult for an unauthorized party to guess the number assigned to a transaction with the attributes previously specified.

The PAIN can be provided to an agent that will be processing the transaction. According to an embodiment of the present invention, a transaction card issued to the agent can be used to process the transaction. At the point of sale, access to the payment system is gained by passing the agent's transaction card through a card reading terminal. Information related to the merchant identification (or merchant category), the specific transaction, such as, for example, the price, product, service, etc., and the PAIN are provided to the payment system. The payment system will compare the information provided at the point of sale related to the merchant and the transaction with the information provided by the buyer when payment was authorized, utilizing the PAIN. If the PAIN is verified by the payment system, funds for the transaction will be passed from the buyer's account directly to the merchant's account via the transaction card presented by the agent. Thus, the transaction card used by the agent does not have access to any of the buyer's funds other than those for the specific transaction authorized by the buyer. Additionally, since the agent's transaction card is utilized to process the transaction and funds merely flow through the agent's transaction card, i.e., the funds are not removed from an account of the agent, the agent does not need to use the buyer's transaction card. Thus, the buyer does not need to provide the agent with a transaction card issued to the buyer.

Once the funds have been transferred from the buyer's account to the merchant's account and the transaction is complete, the buyer can settle the account with the payment system (if necessary). The payment system of the present invention provides buyers with multiple payment options including "Just-In-Time" payments, "Pay In Advance" payments, and/or "Pay In Arrears" payments. The "Just-In-Time" payment option allows the buyer to pay the payment service at the time the transaction is completed. The "Pay In Arrears" payment option provides the buyer with a credit line to pay for transactions. The "Pay In Advance" payment option may provide buyers with interest on funds stored in anticipation of transactions.

All of the payment solutions of the present invention allow the buyer to view all of their account detail on-line, including historical payment information, initiate on-line payments, and initiate and approve on-line authorizations. Buyers can make payments to the payment system in a number of ways, including, for example, via check, ACH credit or debit or wire.

The above and other objects and advantages of the present invention will be apparent upon consideration of the following detailed description, taken in conjunction with accompanying drawings, in which like reference characters refer to like parts throughout, and in which:

FIG. 1 illustrates in block diagram form a payment system according to the present invention;

FIGS. 2A and 2B illustrate in flow diagram form processing for the payment of a transaction according to the present invention;

FIG. 3 illustrates in block diagram form an exemplary account for payment of transactions according to the present invention; and

FIG. 4 illustrates in block diagram form a payment system for permit mail according to the present invention.

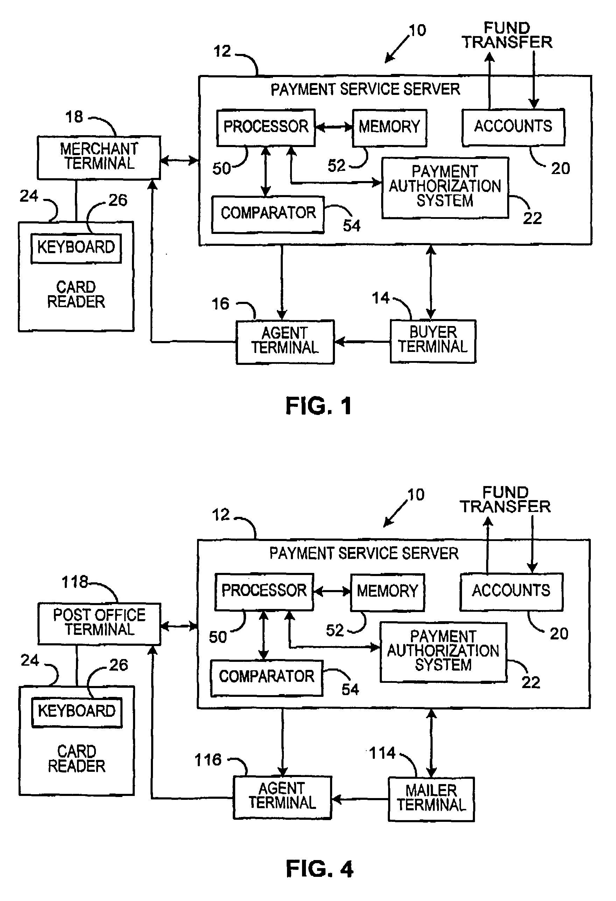

In describing the present invention, reference is made to the drawings, wherein there is seen in Fig. 1 a payment system 10 according to the present invention. System 10 includes a payment service server 12 that enables a buyer to conduct transactions and make payments to a merchant utilizing a third party intermediary, such as an agent, while minimizing the risk of loss of funds for the transaction. The agent may be a third party separate from the buyer or may be an internal agent, such as, for example, an employee, of the buyer. Payment service server 12 is preferably a computer-based system comprising any combination of conventional processors, memory, software, hardware, firmware, etc. For example as illustrated in Fig. 1, payment service server 12 includes a processor 50, a memory 52 and a comparator 54. Comparator 54 may be implemented in hardware or software. Payment service server 12 maintains one or more accounts 20 for the buyer as described below. Payment service server 12 also includes a payment authorization system 22 to generate a one-time authorization number for a transaction requested by the buyer as described below. The buyer communicates with the payments service server 12 utilizing a buyer terminal 14, which may be, for example, a computer based system such as a personal computer, wireless telephone, telephone or the like. Similarly, the agent also communicates with the payments service server 12 utilizing an agent terminal 16, which may be, for example, a computer based system such as a personal computer, wireless telephone, telephone or the like. The merchant communicates with the payment service server 12 utilizing a merchant terminal 18, which also may be a computer based system such as a personal computer, electronic register, wireless telephone, telephone or the like. Optionally, merchant 18 can be provided with a card reader 24 coupled to the merchant terminal 18, having a keypad 26, to access the payment service server 12 as described below.

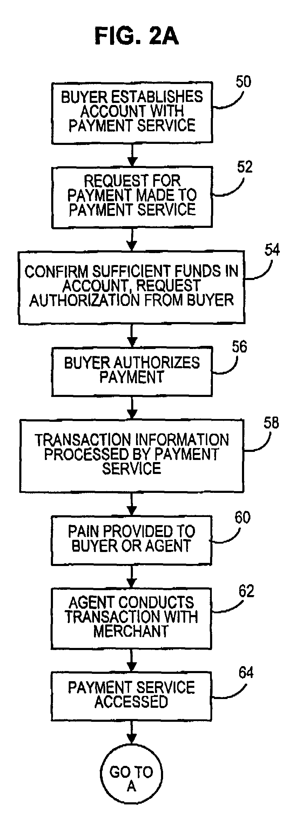

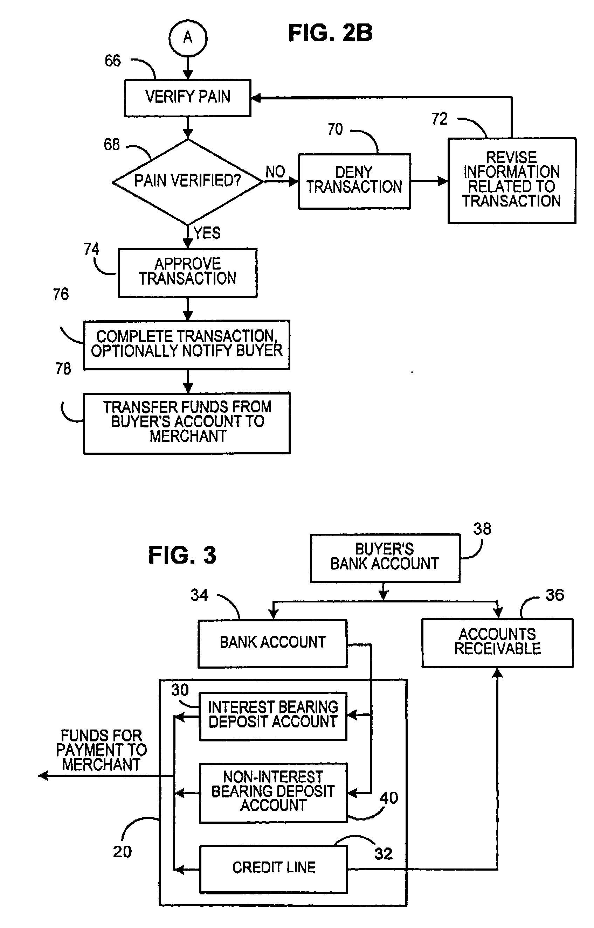

The operation of system 10 will be described with respect to the flow diagrams illustrated in Figs. 2A and 2B. In step 50, a buyer establishes an account 20 with the payment service server 12 to provide services related to payment for transactions authorized by the buyer, utilizing the buyer terminal 14, and conducted by or on behalf of the buyer. Such transactions could include, for example, the purchase of goods or services from a merchant. This account 20 for the buyer can be established in a number of different ways as illustrated in Fig. 3. Payment service server 12 can establish an interest bearing deposit account 30 and/or a non-interest bearing deposit account 40 for the buyer from which funds may be used to pay the merchant as described below. Interest bearing deposit account 30 allows the buyer to accumulate interest on any funds deposited in interest bearing deposit account 30. Funds for the interest bearing deposit account 30 or non-interest bearing deposit account 40 for the buyer can be provided by transferring funds, in any convenient manner, such as, for example, by wire transfer, check, ACH credit, etc., from the buyer's bank account 38 to a bank account 34 of payment service server 12. These funds are then transferred to the interest bearing deposit account 30 or non-interest bearing deposit account 40. Alternatively to, or in addition to, interest bearing deposit account 30 and/or non-interest bearing deposit account 40, payment service server 12 could also establish a credit line 32 for the buyer if desired. Payments made to a merchant on behalf of the buyer via the credit line 32 are billed to the buyer by an accounts receivable department 36 of payment service server 12, which then receives payment from the buyer, typically from the buyer's bank account 38. Additionally, the interest bearing deposit account 30, non-interest bearing deposit account 40 and/or credit line 32 could be maintained by the buyer utilizing the buyer terminal 14 and a telephone dial-up system or network. Thus, the present invention provides the buyer with multiple payment options including "Just-In-Time" payments, "Pay In Advance" payments, and/or "Pay In Arrears" payments. The "Just-In-Time" payment option allows the buyer to pay the payment service server 12 at the time of a transaction with a merchant utilizing an ACH debit transaction from an account, external to payment service server 12, associated with the buyer, such as, for example, a checking account maintained by a financial institution for the buyer. The "Pay In Arrears" payment option provides the buyer with a credit line 32 to pay for transactions with a merchant. The "Pay In Advance" payment option may provide the buyer with interest on pre-paid authorized transactions. All of the payment solutions of the present invention allow the buyer to view all of their account detail on-line via the buyer terminal 14 coupled to a network, such as, for example, the Internet. Account details include, for example, historical payment information, initiate on-line payments, and initiate and approve on-line authorizations.

Referring again to Fig. 2A, suppose, for example, the buyer decides to conduct a transaction with a merchant, utilizing an agent, in which payment must be made to the merchant. In step 52, the buyer, utilizing the buyer terminal 14, sends a request for payment for the transaction to the payment service server 12. The request includes a data set including information identifying the transaction, such as, for example, an identification of the specific merchant or a merchant code that identifies a specific category in which the merchant must belong, an identification of the specific goods or category of goods to be purchased in the transaction, utilizing, for example, a product SKU Number or UPC code, the anticipated amount of the payment for the transaction, a range of dates during which the transaction will occur, and an identification of the agent that will be used to process the transaction with the merchant on behalf of the buyer, utilizing, for example, an alpha-numeric identification number or the like. This information is utilized to limit the availability of funds to a transaction having similar attributes as the provided information.

Optionally, in step 54, payment service server 12 can confirm that the account 20 of the buyer has sufficient funds to cover the cost of the transaction (if the account 20 does not include a credit line 32 (Fig. 3)), and then confirm the request made by the buyer by requesting the buyer to specifically authorize payment for the transaction based on the information received in step 52. Thus, the payment service server 12 will communicate with the buyer through the buyer terminal 14, and the buyer, utilizing the buyer terminal 14, can specifically authorize payment for the transaction. The payment service server 12 can also provide the buyer with a "not to exceed" price for the transaction based on statistics and other information related to discrepancies between previous estimated cost of transactions and the actual cost of the transactions. This allows the buyer to pre-authorize an increase in the cost, as long as the cost does not exceed the specified limit, should a discrepancy be found: This eliminates the need for the buyer to be contacted if a slight discrepancy is found, which could unnecessarily delay completion of the transaction. Of course, if desired, the buyer could also change the "not to exceed" cost provided by payment service server 12 to a higher or lower level or the buyer can specify a percentage of the total estimated cost to add to the estimated cost to derive a "not to exceed" price.

In step 56, the buyer provides authorization for payment associated with the transaction to the payment service server 12 utilizing the buyer terminal 14. If the buyer terminal 14 is a telephone, it should be noted that the buyer could provide authorization utilizing a voice recognition unit (VRU). Of course, if the buyer is making the request for payment, then such authorization could be given along with the request in step 52 and thus steps 54 and 56 may not need to be performed. Once authorization for payment has been provided by the buyer, the funds for the transaction will be entered against the account 20 for the buyer; however, no funds will be removed from the account 20 of the buyer, or in the case of a credit account the buyer will not be billed for the funds, until the transaction has been completed.

Once authorization for payment has been provided by the buyer, in step 58 the information identifying the transaction is processed by payment service server 12. According to one embodiment of the present invention, processing includes the generation of a Payment Approval Identification Number (PAIN) by a payment authorization system 22 (Fig. 1) and storing the information identifying the transaction in the memory 52 in a location associated with the PAIN. The PAIN can be, for example, a randomly or cryptographically generated number that is linked to information that identifies the transaction for which the buyer has authorized payment. The information can include, for example, an identification of the specific merchant or a merchant code that identifies a specific category in which the merchant must belong, an identification of the goods or category of goods to be purchased in the transaction, the anticipated amount of the payment for the transaction, a "not to exceed " cost for the transaction, a range of dates during which the transaction will occur, and an identification of the agent that will be used to process the transaction with the merchant on behalf of the buyer. Thus, the PAIN is a one-time use authorization number specific to the transaction.

In step 60, the PAIN is provided to the buyer or the agent via the buyer terminal 14 or the agent terminal 16, The PAIN can be provided to the buyer terminal 14 by payment service server 12, and the buyer terminal 14 can then forward the PAIN to the agent terminal 16, or, alternatively, the payment service server 12 can provide the PAIN directly to the agent terminal 16. The buyer can request the agent to utilize a transaction card (credit or debit) issued to the agent by payment service server 12 or other financial institution. Thus, the buyer does not have to provide any funds to the agent or provide the agent with a transaction card or account number issued to the buyer to process the transaction as will be described below. Accordingly, system 10 provides a trusted third party system for the payment of a transaction when conducted by an agent on behalf of buyer.

According to another embodiment of the present invention, instead of generating a PAIN, the information related to the transaction is simply stored by payment service server 12 in memory 52 in a location associated with the buyer for accessing as will be described below.

In step 62, the agent processes the transaction with the merchant. At the point of sale, typically the site of the merchant, access to the payment service server 12 is obtained utilizing the merchant terminal 18 along with an access device not issued or associated with the buyer or an account of the buyer, such as, for example, by reading a transaction card (debit or credit) issued to the agent in step 64. Reading of the card can be performed utilizing any type of conventional card reader 24 (Fig. 1). Alternatively, card reader 24 can be a specialized card reader provided by payment service server 12 for use only with the payment system 10. Alternatively, access to the payment service server 12 could be obtained utilizing a radio frequency identification tag (RF ID tag) and associated reader or biometric data of the agent or merchant. Also in step 64, the merchant, or alternatively the agent, can input to the buyer terminal 18 information specific to the transaction being processed and the PAIN issued by the payment service server 12. Inputting of the information specific to the transaction can be performed automatically in the same manner as approvals for conventional debit or credit card transactions are done. Thus, for example, the identification of the merchant and/or the merchant code that identifies the specific category in which the merchant belongs, an identification of the goods being purchased in the transaction, the amount of the required payment for the transaction, the date of the transaction, and an identification of the agent can be automatically sent to the payment service server 12 from the merchant terminal 18 coupled to the card reading device 24 (or RF ID tag reading device or biometric data reading device) at the site of the merchant. Alternatively, information specific to the transaction can be input via an input device, such as, for example, a keypad 26, on the card reader 24 or other reading device. The PAIN may also be input to the merchant terminal 18 by the agent or merchant via keypad 26 on the card reading device 24. A data signal, containing the information specific to the transaction as entered in step 64, is sent from the merchant terminal 18 to the payment service server 12.

It should be noted that access to the payment service server 12 in step 64 will be different depending upon the type of transaction card used by the agent. Thus, for example, if the transaction card is a debit card issued by the payment service server 12, access will be directly to the payment service server 12 for verification of the PAIN as described below. If the transaction card used by the agent is a debit card issued by a financial institution other than payment service server 12, a PIN will be required to access any funds in an account maintained at the financial institution that is associated with the debit card. If the PAIN input does not match the PIN, the financial institution that issued the debit card will send the information to the payment service server 12 for verification of the PAIN as described below. Thus, the existing framework and point of sale terminals presently used to authorize conventional debit card purchases can be used. If the transaction card used by the agent is a credit card issued to the agent, input of the PAIN will cause the credit card issuer to transfer the information to the payment service server 12 for verification of the PAIN as described below. Alternatively, access to the payment service server 12 can be accomplished utilizing a debit card issued by the payment service server 12, followed by entry of the PAIN and the credit card issued to the agent. Furthermore, as described above, access to the payment service server 12 could be obtained utilizing a radio frequency identification tag (RF ID tag) and associated reader or biometric data of the agent or merchant.

Once the payment service server 12 has been accessed and the data signal containing the information specific to the transaction and the PAIN have been sent to the payment service server 12, the payment service server 12 will verify the information specific to the transaction against the PAIN in step 66. Alternatively, instead of the merchant terminal 18 providing all of the information specific to the transaction being conducted to the payment service server 12, the payment service server 12 can send retrieve the information stored in the memory 52 associated with the PAIN and send it to the merchant terminal 18, and the merchant terminal 18 can perform verification of the PAIN against the transaction being conducted. Verification of the PAIN provides security for the buyer that only a transaction pre-authorized by the buyer will occur. The verification procedure optionally comprises several steps, each of which provides security against one or more types of fraudulent activities. For example, in step 66, it is determined if the agent attempting to process the transaction has the authority to process the transaction on behalf of the buyer. This is performed by the comparator 54 comparing the identification of the agent as provided by the buyer in step 52 with the identification of the agent actually conducting the transaction as provided when the payment service server 12 is accessed in step 64. Thus, for example, even if access to the payment system server 12 is obtained and a lost or stolen PAIN provided, without knowing the proper identification of the agent no approvals for any transactions will be granted. In step 66, the PAIN is also verified by ensuring that the PAIN as provided by the agent is a valid PAIN, i.e., was properly issued by the payment service server 12. Thus, for example, if an unscrupulous agent attempts to make a purchase utilizing funds in the account 20 of the buyer by providing an invalid PAIN, no approvals for any transactions will be granted by payment service server 12.

Also in step 66, the PAIN is verified by the comparator 54 comparing the information specific to the transaction being processed with the information identifying to the transaction as provided by the buyer in step 52. Thus, for example, the identification of the specific merchant or a merchant code that identifies a specific category in which the merchant must belong, an identification of the specific goods or category of goods to be purchased in the transaction, the amount of the payment for the transaction or the not to exceed price, and the date of the transaction will be compared with the information provided by the buyer in step 52. Thus, even if an agent has possession of a valid PAIN, the agent can only make a transaction authorized by the buyer, i.e., for a specific item or from a specified type of merchants, for a specified amount and during a specified range of dates. The PAIN cannot be used by the agent for any other purpose, thereby reducing fraudulent activity.

Thus, multiple safeguards are provided by payment system server 12 to the buyer to ensure that payment will be made only for a transaction already authorized by the buyer. In order for the transaction to be approved by the payment service server 12, several criteria must be met. The agent must be properly identified, the agent must provide a valid PAIN, and the specifics of the transaction must be similar to those as pre-approved by the buyer. In step 68 it is determined if the PAIN is verified as described above. If the PAIN is not verified in step 68, then in step 70 the payment service server 12 will not approve payment for the transaction and will send the merchant terminal 18 a "declined" message or the like indicating that the merchant should not complete the transaction with the agent. For example, if one or more of the agent is not correctly identified, the merchant is not correct, the specific goods or category of goods being purchased are not correct, the cost of the transaction exceeds the "not to exceed price" authorized by the buyer, the date is not valid, etc., payment service server 12 will deny the transaction and send a signal indicating such denial to the merchant terminal 18. Optionally, in step 72, the buyer can be contacted, through the buyer terminal 14, in real time to revise the information related to the transaction, such as, for example, the "not to exceed price" or date or otherwise fix the problem that resulted in the PAIN not being verified. Thus, a new PAIN could be immediately issued by payment service server 12, and the transaction processed again utilizing the newly issued PAIN. Alternatively, of course, the original PAIN could simply be reissued by payment service server 12 and the transaction processed again using the reissued PAIN. Another safeguard provided by the payment system server 12 to the buyer is the ability of the buyer to cancel the PAIN at any time prior to the transaction being authorized. Thus, the buyer can prevent a previously authorized transaction from occurring at any time before the transaction has actually occurred.

Alternatively, if a PAIN is not generated by payment system server 12, the merchant can communicate with the payment service server 12, via the merchant terminal 18, and provide the a data signal containing information specific to the transaction as described above along with an identification of the buyer. The comparator 54 of payment system server 12 can then compare all of the transactions, stored in the memory 52, for which payment has been authorized by the buyer with the information specific to the transaction to determine if the transaction currently being processed has been authorized by the buyer.

If in step 68 it is determined that the PAIN is verified, then in step 74 approval for the transaction is provided by the payment service server 12 to the merchant terminal 18. Such approval indicates to the merchant that payment will be made by the payment service server 12, and the merchant can allow the transaction to proceed. In step 76, the merchant and agent can complete the transaction, and the payment service server 12 can optionally provide notification to the buyer, via buyer terminal 14, that the transaction has been completed. This provides independent verification that an authorized transaction has been completed by the agent on behalf of the buyer on a specified date.

In step 78, the payment system server 12 transfers funds from an account 20 of the buyer to the merchant. Such transfer can occur similar to a conventional debit card or credit card payment. Recall that at the time the buyer provided authorization for the transaction in step 56, it was not necessary to move money from the account 20 of the buyer. Thus, the buyer has not occurred any type of finance charges or fees if the payment is being done utilizing the credit line 32, nor has the buyer lost any interest from money being removed from the interest bearing deposit account 30.

The transfer of funds flows from the account 20 of the buyer maintained by payment service server 12 to the merchant via the transaction card utilized by the agent. Thus, no funds have been removed or debited against the actual transaction card used by agent to access the payment service server 12. This provides benefits to both the buyer and the agent. The buyer does not need to provide the agent with a transaction card or account number issued to the buyer, or provide cash or a check to the agent to pay for the transaction, thus providing security for any funds of the buyer. Instead, the agent can use a transaction cared (debit card or credit card) issued to the agent to access the payment service server 12, process the transaction on behalf of the buyer, and the funds will be removed from the account 20 of the buyer. Thus, the agent does not have to float the cost of the transaction until paid by the buyer should the agent use a transaction card issued to the agent to process the transaction.

Thus, the system 10 allows an agent to process a transaction with a merchant on behalf of a buyer, without the buyer having to provide funds to the agent or allow the agent to have direct access to unlimited funds to pay for the transaction. Additionally, the system 10 reduces the amount of record keeping for both buyers and merchants, since all payments are made electronically utilizing a payment service. Since a buyer can have funds released based on use, i.e., for a specific purchase or from a specific category of merchants, it allows the buyer to easily track and fund the account with the payment service. For example, a business could now establish one account for use by several employees. By controlling the release of the funds in the account for only authorized purchases or for use only with a specified category of merchants, fraudulent use of the business's funds can be significantly reduced.

Those skilled in the art will also recognize that various modifications can be made. For example, the system 10 can be used to give a gift to someone instead of providing a gift certificate. In a gift-giving scenario, the buyer in Fig. 1 would be the gift giver, and the agent would be the recipient of the gift. The gift giver can request a payment for a transaction, utilizing the buyer terminal 14, that will be conducted by the recipient in one or more specific categories of merchants, such as, for example, a clothing store, record store, home store, etc. The gift giver can specify the amount of the gift, i.e., transaction amount, that is being authorized, the merchant code(s), date range of use, etc. Upon receipt of the PAIN from the payment service server 12, the gift giver can provide the PAIN to the recipient, along with an indication of the value of the gift, i.e., the amount of funds available, and the category of merchants in which the gift can be used, i.e., where transactions are authorized to occur. At the merchant, the recipient (or merchant) can then access the payment service server 12 utilizing the merchant terminal 18 and a transaction card issued to the recipient, provide the PAIN, and if verified, have the funds for the transaction transferred from the gift giver's account to the merchant similarly as described with respect to Figs. 2A and 2B. In addition, the gift giver can specify that the PAIN is valid until all funds authorized by the gift giver have been used. Thus, for example, if a $100 gift is being given, the recipient can use the PAIN multiple times until the sum of all transactions is $100. Once the sum of all transactions conducted by the recipient has exceeded $100, the PAIN will become invalid and no more funds will be available from the gift giver's account.

Similarly, the system 10 can be utilized by merchants to provide rebate programs to a buyer without having to issue rebate cards or checks. In the rebate program scenario, a merchant performs the functions of both the merchant and the buyer, while the consumer receiving the rebate would perform the functions of the agent but will get to keep the goods or services purchased in the transaction. Thus, a merchant can establish an account with the payment service server 12 and make requests, utilizing the merchant terminal 18, for payment for a transaction that can be conducted only at that merchant. The merchant can specify the amount of the transaction that is being authorized, i.e., the "rebate," date range of use, etc. Upon receipt of the PAIN from the payment service server 12, the merchant terminal 18 can provide the PAIN to the consumer, i.e., agent terminal 16, along with an indication of the value of the "rebate", i.e., the amount of funds available, and the date range of use. The agent terminal 16 can then conduct transactions with the merchant terminal 18, using the PAIN provided by the merchant terminal 18 and any debit or credit card that provides access to the payment service server 12. As long as the criteria for the transaction being conducted is verified against the PAIN, the transaction can be completed and funds for the transaction will be transferred from the account of the merchant at the payment service server 12 to the merchant. Thus, the consumer, i.e., agent, will not be charged for the transaction. In addition, the merchant can specify that the PAIN is valid until all funds authorized by the merchant have been used.

As another example, the system 10 can be used to monitor and limit the use of funds in an account. For example, a parent could now provide a dependent child with access to funds, but only on a limited basis and for specified items or from a specified category or merchants. Thus, instead of giving a college bound child a credit card or debit card issued to the parent, a parent can utilize the system 10 to provide the child with limited access to funds via the PAIN and a debit card issued to the child by the payment service. For example, the parent can provide the child with a specific amount of funds to be used in the college bookstore or a food store for only specific items, such as, for example, books or food, as opposed to compact discs or alcoholic beverages. The child can access the payment service using the child's transaction card. Of course, the transaction card will not be valid for use except for transactions authorized by the parent. This will prevent the parent from having to send money to the child, or constantly add money to an account that the child has unlimited access to, while enabling the parent to monitor the child's spending.

As another example, the system 10 can be utilized to provide security for transactions conducted between the buyer terminal 14 and merchant terminal 18 over a network, such as, for example, a telephone network or the internet. The buyer will not need to provide a credit card or debit card number over the network via the buyer terminal 14, thus maintaining security and privacy of the buyer's card. Utilizing the system 10 in this scenario, the merchant would also act as an agent for the buyer. The buyer, utilizing the buyer terminal 14, can make a request to the payment service server 12 for payment for a transaction to be conducted with the merchant. The request can include information identifying the purchase transaction, such as, for example, the specific items or category of items included in the transaction, the estimated cost of the transaction, a range of dates during which the transaction will occur, and an identification of the merchant where the transaction will occur. The buyer authorizes the payment system to provide the specified merchant with payment for the transaction, upon completion of the transaction, on the buyer's behalf based on this information. The payment service server 12 processes the information related to the transaction and issues a payment approval identification number (PAIN) for the transaction.

Upon conducting the transaction with the merchant, the buyer terminal 14 will provide the PAIN to the merchant terminal 18. The merchant terminal 18 can then access the payment service server 12, utilizing a debit or credit card issued to the merchant, for verification of the PAIN with the transaction being conducted. If the PAIN is verified by the payment service server 12, the merchant can complete the transaction and funds for the transaction will be passed from the buyer's account directly to the merchant's account via the transaction card utilized by the merchant. Thus, the buyer does not need to send a credit card or debit card number to the merchant terminal 18 via the network, but instead needs only to provide the PAIN to the merchant terminal 18. Since the PAIN is specific to only to a transaction that will be conducted with the merchant, it will have no value should its security be compromised when being transported via the network.

Another example is for the payment of permit mail as illustrated in Fig. 4. Fig. 4 is similar to Fig. 1, except a mailer terminal 114 replaces the buyer terminal 14, and a post office terminal 118 replaces the merchant terminal 18. The processing of a transaction for permit mail is similar to that as described with Figs. 2A and 2B, and will not be repeated again in full detail. Briefly, the processing for permit mail is as follows. A mailer, utilizing the mailer terminal 114, establishes an account with payment service server 12 to provide services related to payment for transactions, including permit mail that will be sent by the mailer. When the mailer will be sending a batch of permit mail, a request for payment for the permit mail is made from the mailer terminal 114 to the payment service server 12. The request includes information identifying the mailing, such as, for example, the induction site where the mailing will be inducted, the permit imprint number under which the mail will be inducted, a range of dates during which the mail will be inducted, the number of pieces (or a maximum number of pieces) of mail to be inducted, the estimated cost of the mailing, the return address on the mailing, and the identification of an agent that will be delivering the mailing for induction to the post office. This information is utilized to limit the availability of funds to a mailing having similar attributes as the provided information.

Optionally, payment service server 12 can ensure sufficient funds are available in the account 20 of the mailer, and request the mailer to specifically authorize payment for the mailing based on the information received from the mailer. Once authorization for payment has been provided by the mailer via the mailer terminal 114, the funds for the permit mail will be entered against the account 20 for the mailer; however, no funds will be removed from the account 20 of the mailer, or in the case of a credit account the mailer will not be billed for the funds, until the transaction has been completed, i.e., the mailing has been inducted by the USPS.

Once authorization for payment has been provided by the mailer, the information identifying the mailing is processed by payment service server 12 as described above. For example, the payment authorization system 22 can generate a PAIN as previously described and store the information identifying the transaction in the memory 52 in a location associated with the PAIN. The PAIN can be, for example, a randomly or cryptographically generated number that is linked to information that identifies the mailing for which the mailer has authorized payment. The information includes, for example, the induction site where the mailing will be inducted, the permit imprint number under which the mail will be inducted, a range of dates during which the mail will be inducted, the number of pieces (or a maximum number of pieces) of mail to be inducted, the estimated cost of the mailing, the return address on the mailing, and the identification of an agent that will be delivering the mailing for induction to the post office. Thus, the PAIN is a one-time use authorization number specific to that mailing.

The PAIN is then provided to the mailer terminal 114, or, alternatively, an agent terminal 116 associated with an agent that will be delivering the mailing to the post office. For example, the agent could be a lettershop that was used to prepare the mailing, a third-party delivery service, or an employee of the mailer. The mailing is then delivered by the agent to the post office for induction. At the induction site, i.e., post office, the PAIN is presented, along with the mailing, to a postal clerk who then communicates, utilizing the post office terminal 118, with the payment service server 12. Access to the payment service server 12 is obtained, utilizing a transaction card issued to the agent (or to a postal employee) as previously described, and a data signal containing at least the PAIN is provided from the post office terminal 118 to the payment service server 12. Payment service server 12 then provides the post office terminal 118 with the information that identifies the mailing for which the mailer has authorized payment that is linked to the PAIN, including, for example, the induction site where the mailing will be inducted, the permit imprint number under which the mail will be inducted, a range of dates during which the mail will be inducted, the number (or maximum number) of pieces of mail to be inducted, the estimated cost of the mailing, including the "not to exceed" cost authorized by the mailer, and the return address on the mailing. The post office terminal 118 also determines the actual postage cost for the mailing, and the mailing as presented for induction is compared to the information provided by the payment service server 12.

The post office terminal 118, or postal clerk operating the post office terminal 118, then determines if the mailing as presented meets each of the criteria provided by the payment service server 12. Alternatively, the data signal from the post office terminal 118 to the payment service server 12 could contain information specific to the mailing as presented, and the comparator 54 of the payment service server 12 could perform the comparison between the specific mailing as presented and the information provided by the mailer for generating the PAIN. If it is determined that the mailing as presented does not meet each of the criteria for the mailing based on the information associated with the PAIN, then authorization for payment will not be granted by the payment service server 12. The payment service server 12 will send the post office terminal 118 a "declined" message or the like indicating that the postal clerk should not accept the mailing, and the mailing will be rejected by the post office and not inducted into the mail system. For example, if the induction site where the mailing will be inducted is incorrect, or the permit imprint number under which the mail will be inducted is incorrect, or the mail is not being presented within the range of dates specified, or the number of pieces of mail to be inducted is incorrect, or the actual cost will exceed the "not to exceed" cost authorized by the mailer, or the return address on the mailing is incorrect, the mailing will be rejected.

If the mailing is rejected because it does not meet one or more of the criteria for the mailing, then preferably the mailer can revise the criteria in real-time utilizing the mailer terminal 114, such as, for example, the "not to exceed price" or otherwise fix the problem that caused the mailing to be rejected and represent the mailing to the post office for a new comparison. Thus, a new PAIN could be immediately issued by payment service server 12, and the mail represented to the post office, or the mailing could be fixed to fit within the criteria specified for the original PAIN. Alternatively, the mailer could approve a change in the criteria stored by payment service server 12. In this case, when the mail is represented to the post office, the postal clerk would receive the revised criteria which presumably would allow the postal clerk to accept the mail.

If it is determined that the mailing as presented meets the criteria as specified by the mailer for generation of the PAIN, then authorization for payment will be granted, the payment service server 12 will send an "approved" message or the like to the post office terminal 118, and the transaction can be completed, i.e., the mailing can be inducted into the mail system. Optionally the payment service server 12 can provide notification to the mailer terminal 114 that the mailing has been inducted into the mail system. The payment system server 12 will then transfers funds from an account 20 of the mailer to the post office via the card utilized by the agent.

The system 10 can also be utilized if a secondary or even tertiary agent, not known to the buyer at the time of authorization of the transaction, is used to process the transaction. For example, using the permit mail example given above, it is possible that the mailing will be delivered for induction (ether by the mailer or an agent known to the mailer) but will not be inspected and inducted until some later time such that the party making the delivery will no longer be at the post office. Thus, at the actual time of inspection and induction it will be necessary to access the payment service server 12 to verify the PAIN issued for that mailing. However, if the mailer or agent that was identified by the mailer when authorizing the transaction is not present, the PAIN will not be verified. According to another embodiment of the present invention, a postal clerk at the post office can act as a secondary agent for the mailer as follows.

When the mailing is delivered to the post office (either by the mailer or an agent authorized by the mailer), the PAIN will be verified, utilizing the post office terminal 118, and the transaction will be identified as being a "delayed transaction," i.e., the transaction will not be completed until some later time using a secondary agent. Payment service server 12 will then issue a pre-authorization code that associates the transaction authorized by the buyer with the post office. The pre-authorization code acts as a secondary PAIN. At this time, however, no funds will be removed or charged to the account 20 of the buyer. When the mailing is verified using and the actual cost determined at some later time, a postal clerk, using the post office terminal 118, accesses the payment service server 12, using a transaction card issued to the post office, and provides the pre-authorization number and the specific details of the transaction, i.e., the actual cost, etc. The payment service server 12 will then verify the pre-authorization code against the information provided by the mailer for generation of the original PAIN, and, if it is determined that the mailing as presented meets the criteria as specified by the mailer, authorization for payment will be granted and the transaction can be completed, i.e., the mailing can be inducted into the mail system.

The payment system server 12 will then transfer funds from an account 20 of the mailer to the post office via the transaction card utilized by the post office. Thus, even though the mailer may not have known the specifics with respect to the identification of the post office when authorizing the transaction, the post office can still be utilized as an agent by the mailer to complete the transaction. It should be understood, of course, that use of a secondary, tertiary, etc. agent according to the present invention is not limited to transactions occurring with the post office, but can also be utilized for transactions with any merchant.

While preferred embodiments of the invention have been described and illustrated above, it should be understood that these are exemplary of the invention and are not to be considered as limiting. Accordingly, the invention is not to be considered as limited by the foregoing description.

## Claims

1. A method for authorizing funds transfer from a buyer's account to a merchant's account, the method comprising:
storing at a payment service server a data set including information identifying a transaction for which funds transferis required;
upon processing of the transaction, granting access to the payment service server via a merchant terminal and an access device associated with an account other than the buyer's account;
receiving, at the payment service server, a data signal containing information specific to the transaction from the merchant terminal;
comparing, at the payment service server, the information specific to the transaction with the information identifying the transaction;
if the information specific to the transaction favorably compares with the information identifying to the transaction, providing an authorization signal from the payment service server to the merchant terminal to complete the transaction; and
providing funds from the payment service server to pay for the transaction.

2. The method according to claim 1, wherein providing funds further comprises:
providing funds from at least one payment account established by the payment service server for the buyer.

3. The method according to claim 2, wherein the at least one payment account includes an interest bearing deposit account.

4. The method according to claims 2 or 3, wherein the at least one payment account includes a non-interest bearing deposit account.

5. The method according to any one of claims 2, 3 or 4, wherein the at least one payment account includes a credit account.

6. The method according to any one of the preceding claims, wherein the information identifying the transaction includes at least one of an identification of the merchant, a merchant code that identifies a specific category in which the merchant must belong, an identification of specific goods or services to be purchased in the transaction, a category of goods or services from which the goods or services being purchased in the transaction must belong, an anticipated amount of funds for the transaction, a range of dates during which the transaction will occur, and an identification of an agent that will be used to process the transaction.

7. The method according to any one of the preceding claims, wherein storing the data set further comprises:
generating an identification number associated with the transaction, the identification number being linked with the information identifying the transaction;
storing the data set including information identifying the transaction in a memory location associated with the identification number; and
providing the identification number to the buyer terminal or an agent terminal for use in processing the transaction.

8. The method according to claim 7, wherein the data signal containing information specific to the transaction includes the identification number associated with the transaction.

9. The method according to claim 8, wherein comparing further comprises:
comparing the information identifying the transaction stored in the memory location associated with the identification number with the information specific to the transaction.

10. The method according to any one of the preceding claims, wherein storing the data set further comprises:
storing the data set including information related to the transaction in a memory location in the payment service server identified by the buyer.

11. The method according to claim 10, wherein comparing further comprises:
comparing the information identifying the transaction stored in the memory location identified by the buyer with the information specific to the transaction.

12. The method according to any one of the preceding clams, wherein if funds are provided to pay for the transaction, the method further comprises:
providing confirmation to the buyer terminal of the providing of funds for payment.

13. The method according to any one of the preceding clams, wherein the access device is a transaction card.

14. The method according to any one of the preceding clams, wherein the access device is a radio frequency identification tag.

15. The method according to any one of the preceding clams, wherein the access device utilizes biometric data.

16. The method according to any one of the preceding clams, wherein the transaction includes induction of a mailing by a postal authority.

17. A system to provide funds to pay for a transaction between a buyer and a merchant, the system comprising:
a buyer terminal associated with the buyer;
a merchant terminal associated with the merchant; and
a payment service server including a memory, a comparator and at least one payment account for the buyer, the payment service server arranged to store a data set including information identifying a transaction for which funds transfer is required and receive information specific to the transaction from the merchant terminal upon processing of the transaction, the payment service server being further arranged to grant access by the merchant terminal utilizing an access device associated with an account other than the buyer's account, the comparator arranged to compare the information specific to the transaction received from the merchant terminal with the information identifying the transaction stored in the memory, and if the information specific to the transaction compares favorably with the information related to the transaction, the payment service server is arranged to provide funds from the at least one payment account for the buyer to the merchant to pay for the transaction.

18. The system according to claim 17, wherein the at least one payment account includes an interest bearing deposit account.

19. The system according to claims 17 or 18, wherein the at least one payment account includes a non-interest bearing deposit account.

20. The system according to any one of the preceding clams, wherein the at least one payment account includes a credit account.

21. The system according to any one of the preceding clams, wherein the access device is a transaction card.

22. The system according to any one of the preceding clams, wherein the access device is a radio frequency identification tag.

23. The system according to any one of the preceding clams, wherein the access device utilizes biometric data.

24. The system according to any one of the preceding clams, wherein the transaction is processed over a network.

25. The system according to any one of the preceding clams, further comprising:
a first account number associated with the at least one payment account; and
a second account number associated with the at least one payment account,
wherein the second account number allows access to the at least one payment account only for deposits to the at least one payment account.
